# EUROPEAN PATENT APPLICATION

(11) **EP 4 391 431 A1**
(43) Date of publication of application: **26.06.2024**
(21) Application number: 23218046.3
(22) Date of filing: 19.12.2023
(51) Int. Cl.: H04L 1/1829

(54) **CROSS-LINK ACKNOWLEDGMENT**

(30) Priority: 19.12.2022 US 202263433505 P
(71) Applicant: Comcast Cable Communications LLC, Philadelphia, Pennsylvania 19103 (US)
(72) Inventor: BAYKAS, Tuncer, Philadelphia, PA 19103 (US); KIM, Jeongki, Philadelphia, PA 19103 (US); DINAN, Esmael Hejazi, Philadelphia, PA 19103 (US); LANANTE, Leonardo Alisasis, Philadelphia, PA 19103 (US); HUQ, Kazi Mohammed Saidul, Philadelphia, PA 19103 (US)
(74) Representative: V.O.

(57) **Abstract**

A station may communicate with an access point or another station. A data transmission may overlap with an acknowledgement message associated with the data transmission. The acknowledgement message may indicate a detected error in an initial portion of the data transmission. The data transmission may be stopped, or continued, based on the detected error and/or based on a characteristic of the detected error.

## Description

### CROSS-REFERENCE TO RELATED APPLICATIONS

This application claims the benefit of U.S. Provisional Application No. 63/433,505, filed on December 19, 2022. The above referenced application is hereby incorporated by reference in its entirety.

### BACKGROUND

A station communicates with an access point or another station via a frequency band. A data unit is used to transmit data via the frequency band.

### SUMMARY

The following summary presents a simplified summary of certain features. The summary is not an extensive overview and is not intended to identify key or critical elements.

A computing device, such as a station, may communicate with an access point or another station. Communications may occur via different links (e.g., frequency bands). For example, a data unit may be communicated via a first link, and an acknowledgement frame may be communicated via a second link. The acknowledgement frame may overlap with transmission of the data unit. For example, an acknowledgement frame may be sent based on detecting an error in a physical layer header or a medium access control protocol data unit, without waiting for transmission of a data unit to be completed. Data transmission may stopped or continued, for example, based on a characteristic of a detected error. For example, if an error is detected in a physical header, an acknowledgement frame may be sent and the transmission of the data unit may be stopped; or, if an error is detected in a medium access control protocol data unit, an acknowledgement frame may be sent and the error may be recorded without stopping the transmission of the data unit. A second link may be monitored for acknowledgement frames during a data transmission on a first link so that timely actions may be taken and/or delays in transmission may be avoided and/or reduced.

These and other features and advantages are described in greater detail below.

### BRIEF DESCRIPTION OF THE DRAWINGS

Some features are shown by way of example, and not by limitation, in the accompanying drawings. In the drawings, like numerals reference similar elements.
FIG. 1 shows example wireless communication networks.
FIG. 2 shows example devices in a communication network.
FIG. 3A shows an example of Physical Layer Protocol Data Unit (PPDU).
FIG. 3B shows another example of PPDU.
FIG. 4 shows an example for wireless medium access by a plurality of stations (STAs) in a Wireless Local Area Network (WLAN).
FIG. 5 shows an example multi-link acknowledgement operation.
FIG. 6 shows an example method.
FIG. 7 shows an example method.
FIG. 8 shows an example operation.
FIG. 9 shows another example operation.
FIG. 10 shows an example method.
FIG. 11 shows another example method.
FIG. 12 shows example elements of a computing device that may be used to implement any of the various devices described herein.

### DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems.

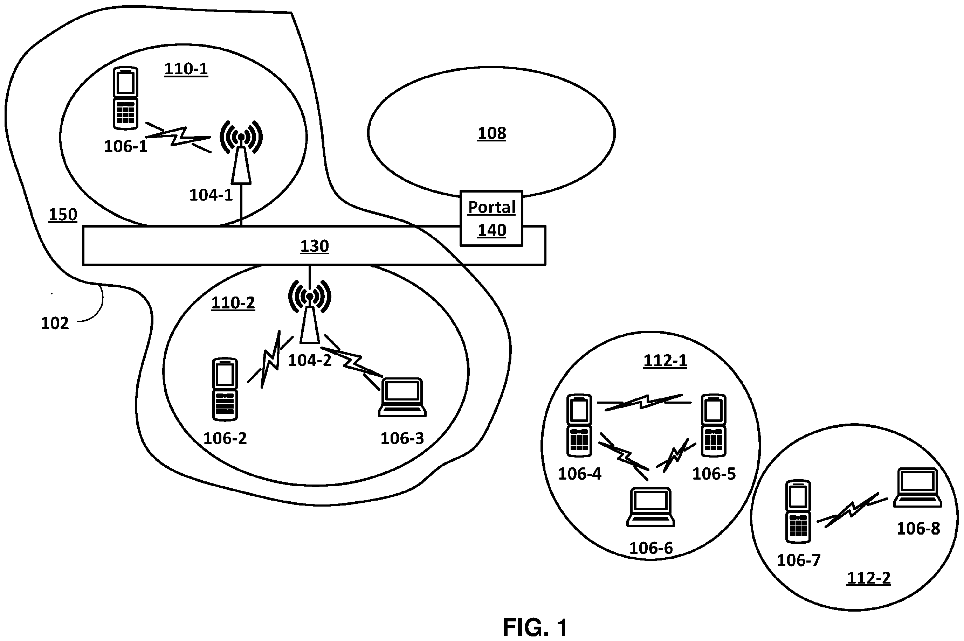

FIG. 1 shows example wireless communication networks. The example wireless communication networks may be a wireless local area network (WLAN) 102. The WLAN 102 may comprise an Institute of Electrical and Electronic Engineers (IEEE) 802.11 infra-structure network, or any other type of communication network. The WLAN 102 may comprise one or more basic service sets (BSSs) 110-1 and 110-2. BSSs 110-1 and 110-2 may each include a set of an access point (AP or AP STA) and at least one station (STA or non-AP STA). For example, BSS 110-1 includes an AP 104-1 and a STA 106-1, and BSS 110-2 includes an AP 104-2 and STAs 106-2 and 106-3. The AP and the at least one STA in a BSS may be configured to perform an association procedure to communicate with each other.

The WLAN 102 may comprise a distribution system (DS) 130. DS 130 may be configured to connect BSS 110-1 and BSS 110-2. DS 130 may enable an extended service set (ESS) 150 by being configured to connect BSS 110-1 and BSS 110-2. The ESS 150 may be a network comprising one or more Aps (e.g., Aps 104-1 and AP 104-2) that may be connected via the DS 130. The APs included in ESS 150 may have the same service set identification (SSID). WLAN 102 may be coupled to one or more external networks. For example, WLAN 102 may be connected to another network 108 (e.g., 802.X) via a portal 140. Portal 140 may function as a bridge connecting DS 130 of WLAN 102 with the other network 108.

The example wireless communication networks may also, or alternatively, comprise one or more ad-hoc networks and/or independent BSSs (IBSSs). For example, FIG. 1 shows example IBSSs, where STAs 106-4, 106-5 and 106-6 may be configured to form a first IBSS 112-1 and STAs 106-7 and 106-8 may be configured to form a second IBSS 112-2. An ad-hoc network and/or IBSS is a network that includes a plurality of STAs without a centralized communication device, such as an AP. The plurality of STAs may be configured to communicate without requiring the presence of an AP. For example, the plurality of STAs in the IBSS may communicate with each other using peer-to-peer communication (e.g., not via an AP). IBSSs do not include a centralized management entity (e.g., an AP) configured to perform a centralized management. STAs within an IBSS are managed in a distributed manner. STAs forming an IBSS may be fixed and/or mobile. The STAs (e.g., STAs 106-4, 106-5, 106-6, 106-7, 106-8) may or may not be permitted to access the DS 130 to constitute a self-contained network.

A STA may comprise one or more layers in accordance with the open systems interconnection (OSI) model. For example, STAs may comprise a medium access control (MAC) layer that may be in accordance with a defined standard (e.g., an IEEE 802.11 standard, or any other standard). A physical (PHY) layer interface for a radio medium may include the APs and the non-AP stations (STAs). The STA may comprise one or more of a computing device, a mobile terminal, a wireless device, a wireless transmit/receive unit (WTRU), user equipment (UE), a mobile station (MS), a mobile subscriber unit, and/or a user device. For example, with respect to wireless LAN communications, a device participating in uplink multi-user, multiple input, multiple output (MU-MIMO) and/or uplink orthogonal frequency division multiple access (OFDMA) transmission may be referred to as a STA. STAs may not be limited to only participating in wireless LAN communications, and may perform other types of communications, operations, and/or procedures.

A frequency band to be used for communication may include multiple sub-bands and/or frequency channels. For example, messages (e.g., data packets, physical layer protocol data units (PPDUs)) conforming to the IEEE 802.11 standard (e.g., IEEE 802.11n, 802.11ac, 802.1 1ax, 802.11be, etc., standards) may be sent (e.g., transmitted) over the 2.4, 5 GHz, and/or 6 GHz bands. Each of the bands may be divided into multiple 20 MHz channels. PPDUs conforming to the IEEE 802.11 standard may be sent, for example, via a physical channel with a minimum bandwidth of 20 MHz. Larger channels may be formed through channel bonding. For example, the PPDUs may be sent via physical channels with bandwidths of 40 MHz, 80 MHz, 160 MHz, 520 MHz, or any other frequency greater than 20 MHz, by bonding together multiple 20 MHz channels. For example, PPDUs conforming to the IEEE 802.11ad and/or 802.11ay standard amendments may be sent over the 60 GHz band, which may be divided into multiple 2.16 GHz channels. The PPDUs may be sent over a physical channel having a minimum bandwidth of 2.16 GHz. Larger channels may be formed through channel bonding. For example, PPDUs may be sent over physical channels having bandwidths of 4.32 GHz, 6.48 GHz, 8.64 GHz by bonding together multiple 2.16 GHz.

A PPDU may be a composite structure that may comprise a PHY preamble and a payload in the form of a physical layer convergence protocol (PLCP) service data unit (PSDU). For example, the PSDU may comprise a PLCP preamble, a header, and/or one or more MAC protocol data units (MPDUs). Information indicated by the PHY preamble may be used by a receiving device to decode subsequent data in the PSDU. Preamble fields may be duplicated and sent in each of multiple component channels in a bonded channel, for example, if the PPDU is sent via the bonded channel. The PHY preamble may comprise both a legacy portion (e.g., a legacy preamble) and a non-legacy portion (e.g., a non-legacy preamble). The legacy preamble may be used for packet detection, automatic gain control and channel estimation, etc. The legacy preamble also may generally be used to maintain compatibility with legacy devices. The information provided in, and the format and coding of the non-legacy portion of the preamble may be based on the particular IEEE 802.11 protocol to be used to send the payload.

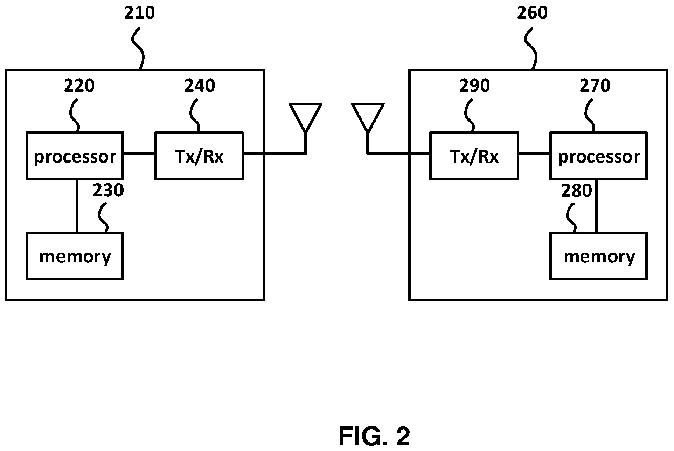

FIG. 2 shows example devices in a communication network. The communication network of FIG. 2 may comprise multiple devices (e.g., communication devices 210 and 260). The communication devices 210 and 260 may perform various functions and procedures as described herein. For example, the communication device 210 may operate as an AP (e.g., an AP STA) and the communication device 260 may operate as a STA (e.g., a non-AP STA). The communication device 210 may operate as a STA (e.g., a non-AP STA) and the communication device 260 may operate as an AP (e.g., an AP STA). Also, or alternatively, the communication device 210 and the communication device 260 may both operate as STAs (e.g., a non-AP STAs) or may both operate as APs (e.g., AP STAs).

The communication device 210 may comprise at least one processor 220, a memory 230, and/or at least one transceiver (e.g., RF unit) 240. The communication device 260 may comprise at least one processor 270, memory 280, and/or at least one transceiver (e.g., RF unit) 290. The transceivers (e.g., transceivers 240, 290) may send/receive radio signals. The transceivers may operate as a PHY layer (e.g., a PHY layer in accordance with an IEEE 802.11 protocol, a 3^{rd} generation partnership project (3GPP) protocol, etc.). The processors (e.g., processors 220, 270) may operate as a PHY layer and/or MAC layer. The processors may be operatively connected to the transceivers, respectively. The communication devices 210 and/or 260 may be a multi-link device (MLD), that is a device capable of operating over multiple links (e.g., as defined by the IEEE 802.11be standard amendment). A MLD has multiple PHY layers. The multiple PHY layers may be implemented using one or more of transceivers 240 and/or 290. Processor 220 and/or 270 may implement functions of the PHY layer, the MAC layer, and/or a logical link control (LLC) layer of the corresponding communication devices 210 and/or 260.

The processors and/or the transceivers may comprise an application specific integrated circuit (ASIC), other chipset, logic circuit, and/or data processor. The memory (e.g., memory 230, 280) may include read-only memory (ROM), random access memory (RAM), flash memory, memory card, storage medium and/or other storage unit. The procedures described herein may be executed by modules that perform various functions described herein (e.g., in accordance with instructions stored in the memory). The modules can be stored in the memory and executed by the processor. The memory may be integrated with the processor or may be external to the processor. The memory may be operatively connected to the processor. The processor may implement the functions, processes and/or methods as described herein. For example, the processor 220 may be implemented to perform operations of the AP as described herein. For example, the processor 270 may be implemented to perform operations of the STA as described herein. The memory may store instructions that, when executed by one or more processors, cause the communication device to perform methods as described herein. For example, the memory may be a non-transitory computer-readable medium comprising instructions that, when executed by the one or more processors, cause the one or more processors to perform methods and operations described herein. For example, the memory 230 may store instructions that, when executed by the processor 220, cause the processor 220 to perform operations of the AP as described herein. For example, the memory 280 may store instructions that, when executed by the processor 270, cause the processor 270 to perform operations of the STA as described herein.

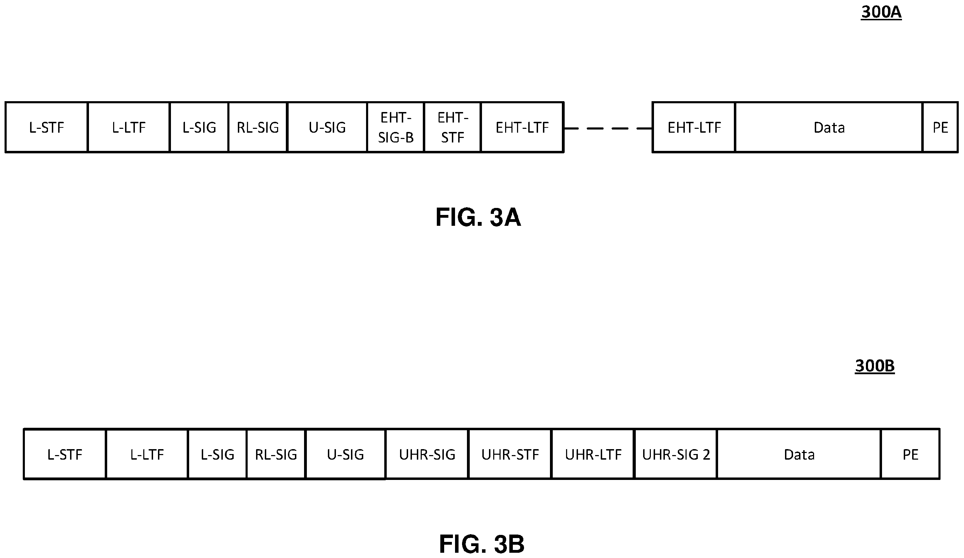

FIG. 3A shows an example PPDU 300A. The PPDU 300A may be used by a device (e.g., STA and/or AP) to send (e.g., transmit) on a wireless medium. The PPDU 300A may be an Extremely High Throughput (EHT) PPDU which may be used by devices conforming to the IEEE 802.11be standard amendment. Such devices may operate in the 2.4, 5, and/or 6 GHz bands. The PPDU 300A may be sent (e.g., transmitted) over a bandwidth of up to 320MHz. The PPDU 300A may be used by a device for both single user (SU) and multi-user (MU) transmissions.

As shown in FIG. 3A, PPDU 300A may include fields such as an non-HT Short Training field (L-STF), a non-HT Long Training field (L-LTF), a non-High-Throughput (non-HT) Signal field (L-SIG), a non-HT Repeated Signal field (RL-SIG), a Universal Signal field (U-SIG), an EHT Signal Field B (EHT-SIG-B), an EHT Short Training Field (EHT-STF), one or more EHT Long Training field (EHT-LTF), a Data field, and a Packet Extension (PE) field.

The L-STF may be used by a receiver of PPDU 300A to synchronize with the carrier frequency and frame timing of a transmitter of PPDU 300A and to adjust the receiver signal gain. The L-LTF may be used by the receiver of PPDU 300A to estimate channel coefficients, for example, to equalize the channel response (e.g., amplitude and phase distortion) in both Signal fields (e.g., the L-SIG, the RL-SIG, the U-SIG, the EHT-SIG-B) and the Data field of the PPDU 300A.

The L-SIG and the RL-SIG may contain parameters needed to demodulate the Data field. The L-SIG may be equalized using the channel coefficients estimated using the L-LTF and demodulated to obtain the demodulation parameters of the Data field. The U-SIG may ensure forward compatibility of PPDU 300A. At least some PPDUs that may be backward compatible to IEEE 802.11be may contain the same U-SIG field and/or interpretation. IEEE 802.11be conforming devices may be able to understand at least in part a PPDU developed in a future amendment, for example, if those amendments may contain the U-SIG field as well. The EHT-SIG-B may contain indications per STA of resource unit (RU) allocations. A receiving STA may use the indications in the EHT-SIG-B to locate its payload in the Data field of PPDU 300A.

The L-SIG, the RL-SIG, the U-SIG, and/or the EHT-SIG-B fields may be considered as a PHY Header of PPDU 300A. The EHT-STF and the one or more EHT-LTFs may be used by the receiver of PPDU 300A to estimate channel coefficients, for example, to equalize the channel response (e.g., amplitude and phase distortion) in the Data field of the PPDU 300A. The Data field may contain one or more payloads carried by the PPDU 300A. The one or more payloads may comprise MPDUs. The PE field may be an extension of the PPDU 300A that may be designed to give the receiver of PPDU 300A sufficient time to respond, for example, after receiving PPDU 300A.

FIG. 3B shows another example PPDU 300B which may be used by a device (STA or AP) to send (e.g., transmit) on a wireless medium. As shown in FIG. 3B, the PPDU 300B may include fields such as an non-HT Short Training field (L-STF), a non-HT Long Training field (L-LTF), a non-High-Throughput (non-HT) Signal field (L-SIG), a non-HT Repeated Signal field (RL-SIG), a Universal Signal field (U-SIG), an UHR Signal Field (UHR-SIG), an UHR Short Training Field (UHR-STF), one or more UHR Long Training field (UHR-LTF), an UHR Signal Field 2 (UHR-SIG 2), a Data field, and a Packet Extension (PE) field.

The U-SIG may ensure forward compatibility of the PPDU 300B. At least some PPDUs that may be backward compatible to IEEE 802.11be may contain the same U-SIG field and interpretation. IEEE 802.11be conforming devices may be able to understand at least in part a PPDU developed in a future amendment, for example, if those amendments may contain the U-SIG field as well. The UHR-SIG may contain indications per STA of RU allocations. A receiving STA may use the indications in the UHR-SIG to locate its payload in the Data field of the PPDU 300B.

The UHR-STF and the one or more UHIZ-LTFs may be used by the receiver of the PPDU 300B to estimate channel coefficients, for example, to equalize the channel response (e.g., amplitude and phase distortion) in the Data field of the PPDU 300B. The UHR-SIG 2 may contain indications for MU-MIMO applications. The UHR-SIG field may also be used for other indications related to the Data field, e.g., modulation and coding scheme (MCS), data type, length, etc.

The L-SIG, the RL-SIG, the U-SIG, the UHR-SIG, and/or the UHR SIG 2 fields may be considered as a PHY Header of PPDU 300B. The Data field may contain one or more payloads carried by the PPDU 300B. The bits to be sent (e.g., transmitted) may be padded with zeros if necessary, scrambled, encoded, and modulated. The PE field may be an extension of PPDU 300B designed to give the receiver of the PPDU 300B sufficient time to respond, for example, after receiving PPDU 300B .

At least some wireless communication standards (e.g., IEEE 802.11 standards) may be designed to operate at different frequency bands. The different frequency bands may comprise a wide range of frequency bands, such as sub-1GHz, TV Whitespace (TVWS), 2.4 GHz, 5 GHz, 6 GHz, 45 GHz (e.g., China mmWave), 60 GHz, and/or Infrared. For example, during the development of the IEEE 802.11be standard amendment, multi-link operation (MLO) may have been developed for sub-7 GHz bands (e.g., 2.4 GHz, 5 GHz, and/or 6 GHz bands). The MLO may allow an AP conforming to the IEEE 802.1 1be standard amendment to support more than one sub-7 GHz band. For example, at least some systems (e.g., next generation systems) may support MLO over more bands, including "lightly" licensed bands.

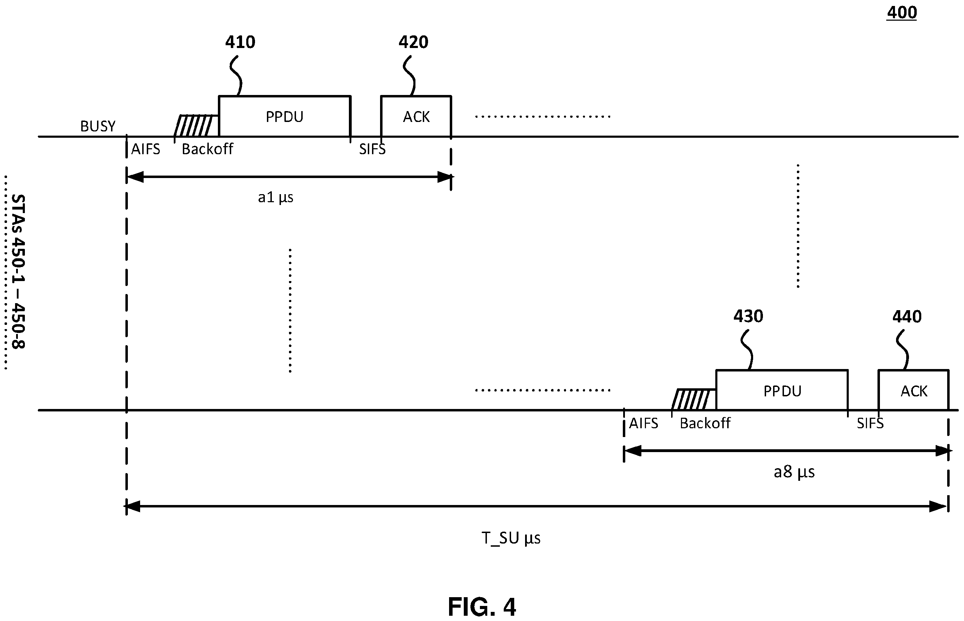

FIG. 4 shows an example for wireless medium access by a plurality of STAs in a WLAN. As indicated in FIG. 4, for example, eight (or any other quantity of) STAs (e.g., 450-1, ..., 450-8) may contend for the medium using Enhanced Distributed Channel Access (EDCA). EDCA may be a listen-before-talk access mechanism that may allow exactly one STA to access a channel and to send (e.g., transmit) a PPDU in a given time slot. A STA may, for example, before transmission using EDCA, listen to the channel for a minimum of an Arbitration Interframe Space (AIFS) duration to determine whether the channel state is IDLE. This listening time for determining whether the channel is IDLE may be followed by one or more backoff slots before the STA attempts to send (e.g., transmit) over the channel. The number of backoff slots may be chosen randomly by the STA. This random selection may reduce the probability of multiple STAs attempting to send (e.g., transmit) at the same time, which may result in a packet detect error. An AP (not shown in FIG. 4) may respond with an acknowledgement (ACK) frame after a Short Interframe Space (SIFS) duration of receiving the PPDU, for example, if the PPDU sent (e.g., transmitted) by the STA is received successfully, for example, by the AP.

For example 400, STAs 450-1, ..., 450-8 may access the channel one by one using EDCA. For example, a STA 450-1 may send (e.g., transmit) a PPDU 410 and may receive an ACK frame 420 from an AP. As shown in FIG. 4, the total duration of channel access by the STA 450-1 may include an AIFS duration, a backoff period, the transmission time of PPDU 410, a SIFS duration, and the transmission time of ACK 420. This total duration of channel access by the STA 450-1 may be expressed as, for example, a1 µs. STAs 450-2 to 450-7 each may access the channel using EDCA and may receive a corresponding ACK frame from the AP. The total duration of channel access by STAs 450-2 to 450-7 may be expressed as a2 µs to a7 µs, respectively. A STA 450-8 may send (e.g., transmit) a PPDU 430 and may receive an ACK frame 440 within a total duration of channel access of a8 µs. Channel access by STAs 450-1, ..., 450-8 may require a cumulative duration T_SU µs = a1 µs + a2 µs ... + a7 µs + a8 µs. The T_SU µs duration may represent an average latency of channel access for each STA when the eight STAs are actively accessing the channel as described with respect to FIG. 4.

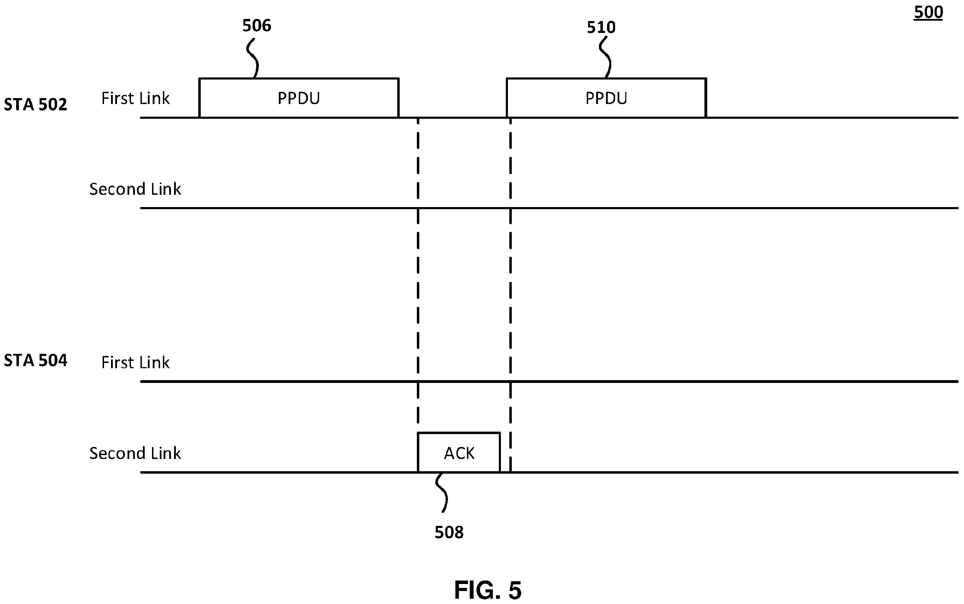

FIG. 5 shows an example multi-link acknowledgement operation. A separate link may be used to send (e.g., transmit) ACK frames, for example, after or in response to the sent (e.g., transmitted) PPDUs, to enhance channel access delay. For example, a PPDU transmission may occur over a 2.4 GHz link, and the ACK for the PPDU transmission may be sent (e.g., transmitted) over a 5 GHz link. FIG. 5 shows an example 500 of such operation. As shown in FIG. 5, example 500 may include a STA 502 and a STA 504. STA 502 may send (e.g., transmit) a PPDU 506 to STA 504 on (or via) a first link. For example, STA 504 may receive a part of the PPDU 506 in error. In at least some operations, STA 504 must wait until an end of reception of the PPDU 506, for example, before it may send (e.g., transmit) an ACK frame 508 to STA 502 on (or via) a second link. STA 502 must wait until the end of transmission of the PPDU 506, for example, before it may resend (e.g., re-transmit) PPDU 506 as PPDU 510 due to the erroneous reception. Such operation may result in an unnecessary delay for STA 504 to receive PPDU 506.

Examples described herein may provide cross-link acknowledgement solutions that may, for example, minimize the delay in data transmission. For example, data transmission and an acknowledgement frame (or message) associated with the data transmission may be communicated via different links. The acknowledgement frame may temporally overlap with the data transmission. For example, an acknowledgement frame may be sent based on detecting an error in the data transmission, without waiting for the data transmission to be completed. For example, a first STA receiving a data transmission (e.g., a PPDU) on (or via) a link may decode a PHY header of the data transmission (e.g., a PPDU), as the data transmission (e.g., a PPDU) is being transmitted from a second STA. The first STA may send, to the second STA, an acknowledgement frame on (or via) a different link, for example, if an error is detected in the PHY header. For example, the first STA may send the acknowledgement frame, for example, immediately after detecting the error. The second STA may stop transmitting the data transmission (e.g., a PPDU), for example, based on (e.g., in response to) receiving the acknowledgement frame. For example, the first STA may decode a MPDU of the data transmission (e.g., a PPDU), as the data transmission (e.g., a PPDU) is being transmitted from a second STA. The first STA may send, to the second STA, an acknowledgement frame on (or via) a different link, for example, if an error is detected in the MPDU. For example, the second STA may monitor the second link for acknowledgement frames, for example, during the data transmission (e.g., a PPDU). The second STA may stop data transmission (e.g., a PPDU) and/or record error and continue data transmission (e.g., a PPDU), for example, based on information in the acknowledgement frame received.

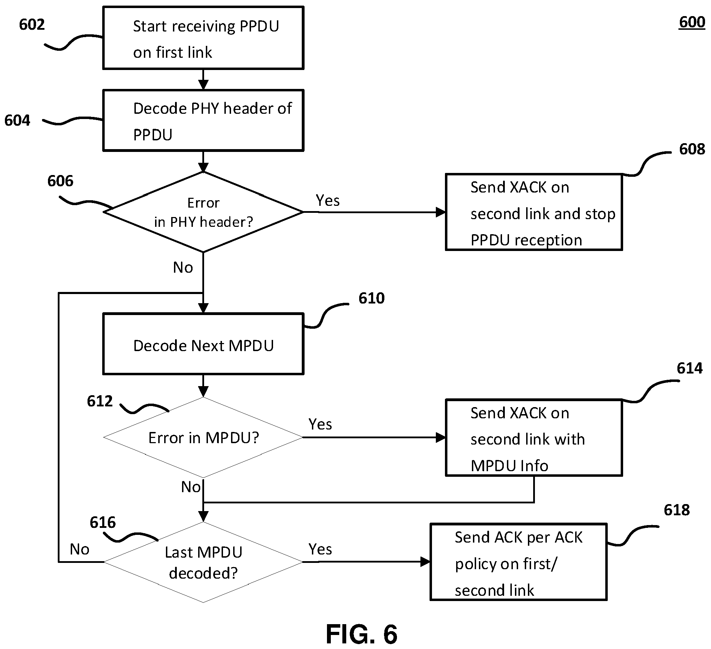

FIG. 6 shows an example method 600. One or more steps of method 600 may be performed by a first STA (e.g., STA or AP) configured to receive a PPDU from a second STA (e.g., STA or AP). The first STA and the second STA may be communicatively coupled by a plurality of links (e.g., 2.4 GHz, 5 GHz, 60 GHz, etc.).

At step 602, receiving a PPDU on a first link of the plurality of links may be started. The PPDU may be, for example, an EHT PPDU as shown by example PPDU 300A or a UHR PPDU as shown by example PPDU 300B described herein with respect to FIG. 3A and/or FIG. 3B.

At step 604, a PHY header of the PPDU may be decoded. As described herein with reference to FIG. 3A, for a PPDU such as PPDU 300A, the PHY header may comprise an L-SIG, an RL-SIG, a U-SIG, and an EHT-SIG-B field. For a PPDU such as PPDU 300B described in FIG. 3B, the PHY header may comprise an L-SIG, an RL-SIG, a U-SIG, a UHR-SIG, and a UHR SIG 2 field.

At step 606, a determination may be made as to whether an error has been detected in the PHY header. For example, for a PPDU such as PPDU 300A, an error in the PHY header may correspond to an error value or a validate value in the U-SIG or the EHT-SIG-B field of the PPDU. For a PPDU such as PPDU 300B, an error in the PHY header may correspond to an error value or a validate value in the U-SIG or the UHR-SIG field of the PPDU.

If the answer at step 606 is yes, the method 600 may proceed to step 608. At step 608, an acknowledgement (e.g., a cross-link ACK (XACK)) frame may be sent, on the second link, to the second STA, and reception of the PPDU may be stopped. The acknowledgement (e.g., XACK) frame may comprise an indication that an error in the PHY header of the PPDU has been detected.

If the answer at step 606 is no, the method 600 may proceed to step 610. At step 610, a next MPDU in the PPDU may be decoded. For example, the next MPDU may correspond to a first occurring MPDU in the PPDU being received. The next MPDU may be decoded, for example, based on information obtained from the PHY header.

At step 612, a determination may be made as to whether an error has been detected in the decoded MPDU. The error may be detected, for example, based on a frame check sequence at the end of the MPDU. If the answer at step 612 is yes, the method 600 may proceed to step 614. At step 614, an acknowledgement (e.g., XACK) frame may be sent, on the second link, with information regarding the decoded MPDU. The method 600 may proceed to step 616. If the answer at step 612 is no, the method 600 may proceed directly to step 616.

At step 616, a determination may be made as to whether a last MPDU in the PPDU has been decoded. The last MPDU may correspond to a last occurring MPDU in the PPDU. If the answer at step 616 is no, the method 600 may return to step 610. If the answer at step 616 is yes, the method 600 may proceed to step 618. At step 618, an acknowledgement (e.g., ACK) frame may be sent, on the first and/or second link, for example, per ACK policy. The sending of an acknowledgement (e.g., ACK) frame at step 618 may correspond to the PPDU being entirely received by the first STA.

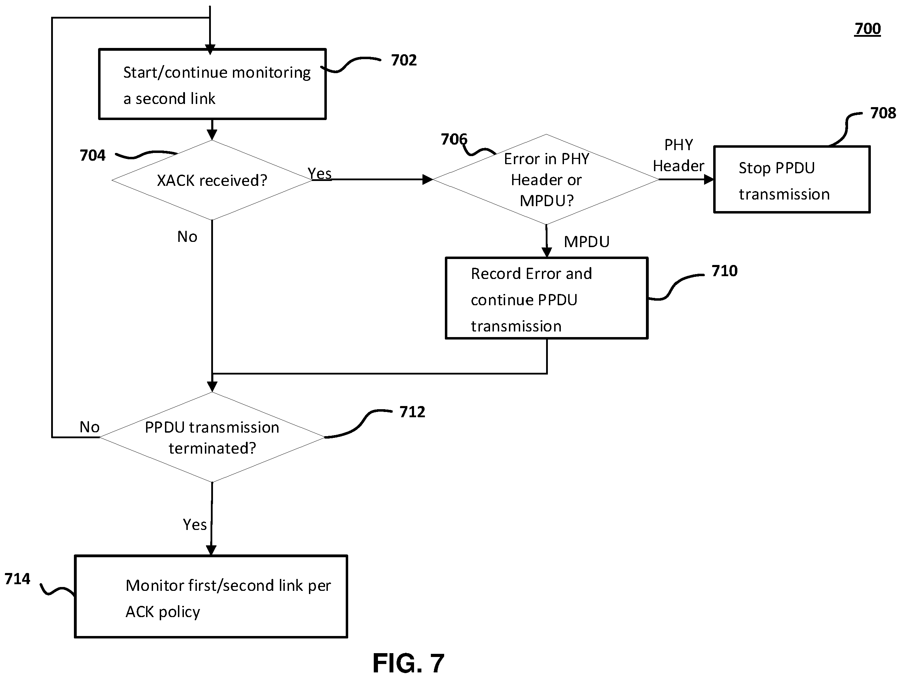

FIG. 7 shows an example method 700. One or more steps of method 700 may be performed by a first STA (e.g., STA or AP) configured to send (e.g., transmit) a PPDU to a second STA (e.g., STA or AP). The first STA and the second STA may be communicatively coupled by a plurality of links (e.g., 2.4 GHz, 5 GHz, 60 GHz, etc.). The PPDU may be, for example, an EHT PPDU as shown by example PPDU 300A or a UHR PPDU as shown by example PPDU 300B described herein.

At step 702, monitoring a second link of the plurality of links may be started and/or continued by the first STA, for example, for acknowledgement (e.g., XACK) frames from the second STA. At step 704, a determination may be made as to whether an acknowledgement (e.g., XACK) frame from the second STA has been received by the first STA.

If the answer at step 704 is yes, the method 700 may proceed to step 706. At step 706, the acknowledgement (e.g., XACK) frame may be decoded, and a determination may be made as to whether the acknowledgement (e.g., XACK) frame may indicate an error in a PHY Header or in an MPDU of the PPDU being sent (e.g., transmitted) by the first STA.

As described herein with reference to FIG. 3A, for a PPDU such as PPDU 300A, the PHY header may comprise an L-SIG, an RL-SIG, a U-SIG, and an EHT-SIG-B field. For a PPDU such as PPDU 300B described in FIG. 3B, the PHY header may comprise an L-SIG, an RL-SIG, a U-SIG, a UHR-SIG, and a UHR SIG 2 field. For example, for a PPDU such as PPDU 300A, an error in the PHY header may correspond to an error value or a validate value in the U-SIG or the EHT-SIG-B field of the PPDU. For another example, for a PPDU such as PPDU 300B, an error in the PHY header may correspond to an error value or a validate value in the U-SIG or the UHR-SIG field of the PPDU. For example, an error in an MPDU of the PPDU may correspond to an error in a Frame Check Sequence (FCS) associated with the MPDU.

If at step 706, it is determined that an error occurred in the PHY Header of the PPDU being sent (e.g., transmitted) by the first STA, the method 700 may proceed to step 708. At step 708, the PPDU transmission from the first STA to the second STA may be stopped.

If at step 706, it is determined that an error occurred in an MPDU of the PPDU being sent (e.g., transmitted) by the first STA, the method 700 may proceed to step 710. At step 710, information regarding the MPDU in error may be recorded, and transmission of the PPDU may be continued. The method 700 may proceed to step 712.

If the answer at step 704 is no, which may indicate that no acknowledgement (e.g., XACK) frame is received on the second link, the method 700 may proceed to step 712. At step 712, a determination may be made as to whether the PPDU transmission to the second STA has been terminated. If the answer at step 712 is no, the method 700 may return to step 702 described herein. If the answer at step 712 is yes, the method 700 may proceed to step 714. At step 714, the first link and/or the second link may be monitored, for example, according to at least some ACK policy (e.g., as defined in an IEEE 802.11 standard draft). For example, the receiving of an acknowledgement (e.g., ACK) frame at step 714 may correspond to the PPDU being entirely received by the second STA.

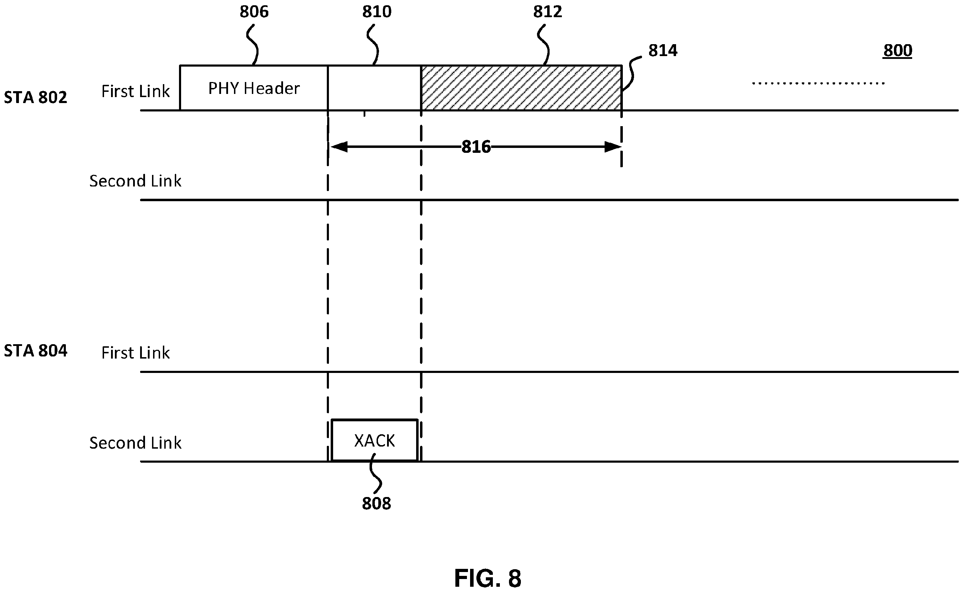

FIG. 8 shows an example operation. As shown in FIG. 8, an example 800 may include a STA 802 and a STA 804. STAs 802 and 804 may be communicatively coupled by a first link and a second link. The first and second links may correspond to different frequency bands (e.g., 2.4 GHz, 5 GHz, 60 GHz, etc.). The first and second links may correspond to a same frequency band (e.g., 2.4 GHz, 5 GHz, 60 GHz, etc.). STAs 802 and 804 may each be a STA or an AP. For example, STA 802 may be configured to operate in accordance with method 700 described herein, and STA 804 may be configured to operate in accordance with method 600 described herein.

In the example 800, a STA 802 may send (e.g., is sending/transmitting) a PPDU 814 to a STA 804. PPDU 814 may comprise a preamble (not shown in FIG. 8), a PHY header 806, and a data field 816. PPDU 814 may be, for example, an EHT PPDU as shown by example PPDU 300A or a UHR PPDU as shown by example PPDU 300B described herein.

A STA 802 may monitor the second link (e.g., as described with respect to step 702 of the method 700 of FIG. 7), for example, as the STA 802 sends (e.g., transmits) PPDU 814 over the first link. Specifically, the STA 802 may monitor the second link for an acknowledgement (e.g., XACK) frame from the STA 804.

A STA 804 may receive a PPDU 814 via the first link and may decode a PHY header 806 of the PPDU 814. For example, the STA 804 may be configured to send (e.g., transmit) an acknowledgement (e.g., XACK) frame on the second link, for example, if detecting an error in the PHY header 806 of the PPDU 814. In the example 800, the STA 804 may detect an error in the PHY header 806 of the PPDU 814 and proceed to send (e.g., transmit) an acknowledgement (e.g., XACK) frame 808 on the second link.

As described herein with reference to FIG. 3A, for a PPDU such as PPDU 300A, the PHY header may include an L-SIG, an RL-SIG, a U-SIG, and an EHT-SIG-B field. For a PPDU such as PPDU 300B as described in FIG. 3B, the PHY header may include an L-SIG, an RL-SIG, a U-SIG, a UHR-SIG, and a UHR SIG 2 field. For example, for a PPDU such as PPDU 300A, an error in the PHY header may correspond to an error value or a validate value in the U-SIG or the EHT-SIG-B field of the PPDU. For a PPDU such as PPDU 300B, an error in the PHY header may correspond to an error value or a validate value in the U-SIG or the UHR-SIG field of the PPDU.

A STA 802 may stop sending (e.g., transmitting) PPDU 814, for example, based on (e.g., in response to) receiving an acknowledgement (e.g., XACK) frame 808 on the second link and determining that the acknowledgement (e.g., XACK) frame 808 is from a STA 804 and is based on (e.g., in response to) PPDU 814. The STA 804 may send (e.g., transmit) the acknowledgement (e.g., XACK) frame 808, for example, after receiving a PHY header 806 in its entirety. The STA 802 may send (e.g., transmit) a part 810 of the data field 816, for example, before receiving the acknowledgement (e.g., XACK) frame 808 and stopping its transmission of the PPDU 814 based on (e.g., in response to) the acknowledgement (e.g., XACK) frame 808. A part 812 of the data field 816 may not be sent (e.g., transmitted), as shown in FIG. 8.

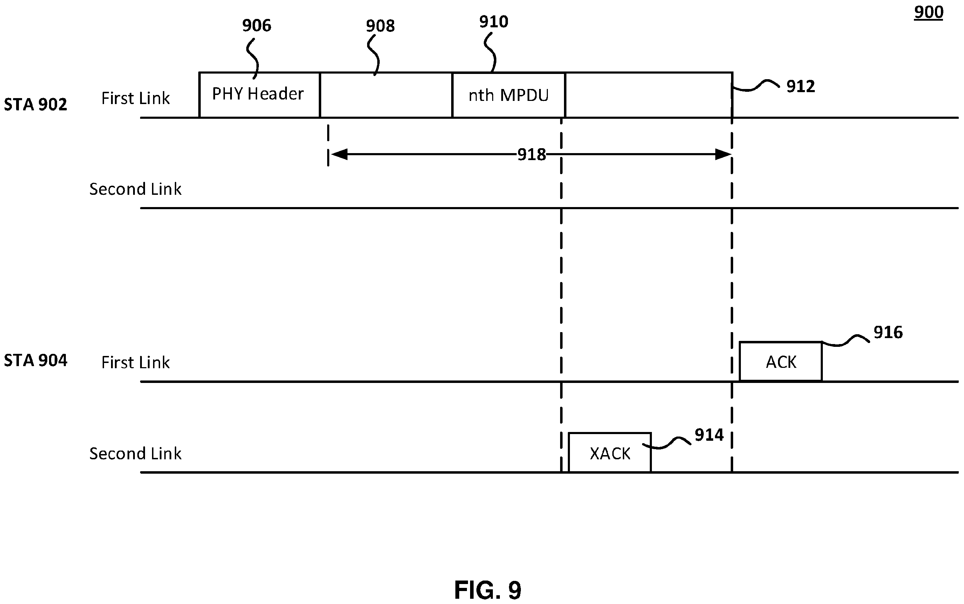

FIG. 9 shows another example operation. As shown in FIG. 9, an example 900 may include a STA 902 and a STA 904. STAs 902 and 904 may be communicatively coupled by a first link and a second link. The first and second links may correspond to different frequency bands (e.g., 2.4 GHz, 5 GHz, 60 GHz, etc.). The first and second links may correspond to a same frequency band (e.g., 2.4 GHz, 5 GHz, 60 GHz, etc.). STAs 902 and 904 may each be a STA or an AP. For example, STA 902 may be configured to operate in accordance with method 700 described herein, while STA 904 may be configured to operate in accordance with method 600 described herein.

In the example 900, a STA 902 may send (e.g., is sending/transmitting) a PPDU 912 to a STA 904. PPDU 912 may include a preamble (not shown in FIG. 9), a PHY header 906, and a data field 918. PPDU 912 may be, for example, an EHT PPDU as shown by example PPDU 300A or a UHR PPDU as shown by example PPDU 300B described herein.

A STA 902 may monitor the second link (e.g., as described herein with respect to step 702 of method 700 of FIG 7), for example, as the STA 902 sends (e.g., transmits) a PPDU 912 on the first link. Specifically, the STA 902 may monitor the second link for an acknowledgement (e.g., XACK) frame from the STA 904.

A STA 904 may receive a PPDU 912 via the first link and may decode a PHY header 906 of the PPDU 912. For example, the STA 904 may be configured to send (e.g., transmit) an acknowledgement (e.g., XACK) frame on the second link, for example, if detecting an error in the PHY header 906 of the PPDU 912. In the example 900, the STA 904 may not detect an error in the PHY header 906 of the PPDU 912 and may not send (e.g., transmit) an acknowledgement (e.g., XACK) frame on the second link, for example, based on decoding the PHY header 906.

A STA 902 may continue to send (e.g., transmit) data field 918 of a PPDU 912, for example, based on the STA 902 not receiving an acknowledgement (e.g., XACK) frame from the STA 904 indicating an error in the PHY header 906. The STA 902 may send (e.g., transmit) a part 908 of the data field 918, for example, before receiving the acknowledgement (e.g., XACK) frame 914. The STA 904 may be configured to determine whether an error is present in each received MPDU of the data field 918 of the PPDU 912, for example, based on the STA 904 receiving the data field 918 of the PPDU 912. Specifically, the STA 904 may check the MPDU for errors, for example, as an MPDU of the PPDU 912 is received. If no error is detected in the MPDU, the STA 904 may check whether the MPDU is the last MPDU of the PPDU 912. If the MPDU is the last MPDU of the PPDU 912, the STA 904 may be configured to acknowledge the PPDU 912 by sending an acknowledgment on the first or second link. If the MPDU is not the last MPDU of the PPDU 912, the STA 904 may proceed to decode and check the next MPDU. If an error is detected in the MPDU, the STA 904 may be configured to send (e.g., transmit) an acknowledgement (e.g., XACK) frame on the second link indicating the error in the MPDU, to the STA 902.

In the example 900, a STA 904 may detect an error in an nth MPDU 910 of a data field 918 of a PPDU 912. The STA 904 may send (e.g., transmit) an acknowledgement (e.g., XACK) frame 914 on the second link to a STA 902. The STA 904 may proceed to decode the next received MPDU of the data field 918 of the PPDU 912, for example, after determining that the nth MPDU 910 is not the last MPDU in the data field 918 of the PPDU 912. The STA 902 monitoring the second link may receive the acknowledgement (e.g., XACK) frame 914 from the STA 904. The STA 902 may decode the acknowledgement (e.g., XACK) frame 914 and may determine that the acknowledgement (e.g., XACK) frame 914 indicates an error in the nth MPDU of PPDU 912, for example, based on (e.g., upon) receiving the acknowledgement (e.g., XACK) frame 914. For example, the STA 902 may record the error and continue its transmission of the PPDU 912.

A STA 902 may continue to monitor the first link or the second link for an acknowledgment of a PPDU 912, for example, if the STA 902 terminates its transmission of the PPDU 912. The link that the STA 902 monitors for the acknowledgment of the PPDU 912 may depend on the ACK policy used. In the example 900, a STA 904 may acknowledge the PPDU 912 by sending (e.g., transmitting) an acknowledgement (e.g., ACK) frame 916 on the first link. The acknowledgement (e.g., ACK) frame 916 may indicate the error in the nth MPDU of the PPDU 912. The STA 902 may receive the acknowledgement (e.g., ACK) frame 916 on the first link.

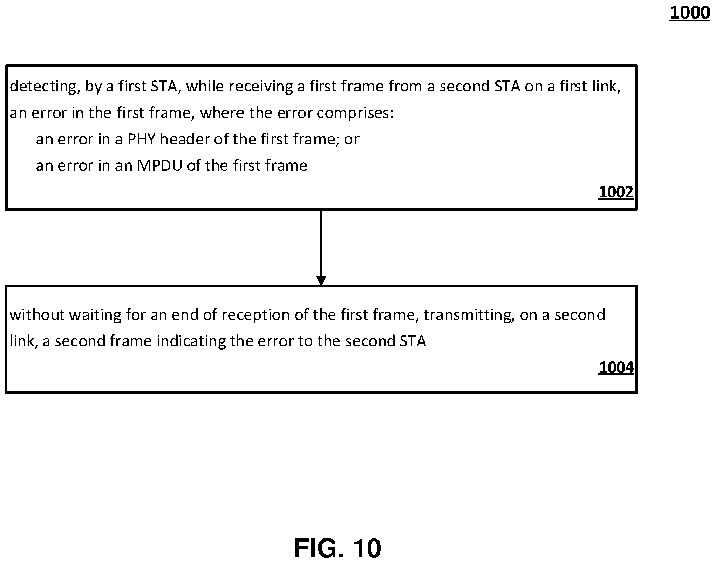

FIG. 10 shows an example method 1000. One or more steps of the example method 1000 may be performed by a first STA (e.g., non-AP STA or AP STA) configured to receive a first frame from a second STA (e.g., STA or AP). The first STA and the second STA may be communicatively coupled by a first link and a second link (e.g., 2.4 GHz, 5 GHz, 60 GHz, etc.).

As shown in FIG. 10, at step 1002, a first STA may detect an error in a first frame, for example, while (e.g., during) receiving the first frame from a second STA on a first link. The error may comprise at least one of: an error in a PHY header of the first frame; or an error in an MPDU of the first frame. For example, the error in the PHY header of the first frame may correspond to an error value or a validate value in a Universal Signal field (U-SIG), an Extremely High Throughout (EHT) Signal field (EHT-SIG), or an Ultra High Reliability (UHR) Signal field (U-SIG) of the PHY header of the first frame. For example, the error in the MPDU of the first frame may correspond to an error in a Frame Check Sequence (FCS) associated with the MPDU. For example, the first frame may comprise one or more MPDUs.

At step 1004, a second frame indicating the error may be sent (e.g., transmitted), on a second link, to a second STA, without waiting for an end of reception of the first frame. For example, the second frame may comprise an acknowledgment frame. The acknowledgment frame may comprise a XACK.

Sending (e.g., transmitting) the second frame may comprise sending (e.g., transmitting) the second frame, for example, based on detecting the error. For example, if the error may be detected in a PHY header of the first frame, sending (e.g., transmitting) the second frame may comprise sending (e.g., transmitting) the second frame, for example, before an end of reception of the PHY header. For example, sending (e.g., transmitting) the second frame may comprise sending (e.g., transmitting) the second frame an interframe spacing after detection of the error. For example, sending (e.g., transmitting) the second frame may comprise sending (e.g., transmitting) the second frame less than an interframe spacing after detection of the error. For example, sending (e.g., transmitting) the second frame may comprise sending (e.g., transmitting) the second frame without an interframe spacing after detection of the error.

Sending (e.g., transmitting) the second frame may comprise sending (e.g., transmitting) the second frame, for example, after an end of reception of the PHY header, if the error is detected in the PHY header of the first frame. For example, sending (e.g., transmitting) the second frame may comprise sending (e.g., transmitting) the second frame an interframe spacing after the end of reception of the PHY header. Sending (e.g., transmitting) the second frame may comprise sending (e.g., transmitting) the second frame less than an interframe spacing after the end of reception of the PHY header. Sending (e.g., transmitting) the second frame may comprise sending (e.g., transmitting) the second frame without an interframe spacing after the end of reception of the PHY header.

Sending (e.g., transmitting) the second frame may comprise sending (e.g., transmitting) the second frame, for example, before an end of reception of a subsequent MPDU of the first frame, if an error is detected in the MPDU of the first frame. For example, sending (e.g., transmitting) the second frame may comprise sending (e.g., transmitting) the second frame an interframe spacing after detection of the error. Sending (e.g., transmitting) the second frame may comprise sending (e.g., transmitting) the second frame less than an interframe spacing after detection of the error. Sending (e.g., transmitting) the second frame may comprise sending (e.g., transmitting) the second frame without an interframe spacing after detection of the error.

For example, the second frame may comprise an indication of the first link. For example, if an error is detected in the MPDU of the first frame, the second frame may comprise an indication of the MPDU. For example, if an error is detected in the MPDU of the first frame, the method 1000 may further comprise decoding a subsequent MPDU of the first frame. For example, if an error is detected in the PHY header of the first frame, the method 1000 may further comprise stopping reception of the first frame based on detecting the error. For example, if an error is detected in the PHY header of the first frame, the second frame may comprise an indication of an error type of the detected error.

For example, the method 1000 may further comprise sending (e.g., transmitting) a frame comprising an indication of cross-ACK (XACK) capability of the first STA, for example, before step 1002. For example, the method 1000 may further comprise receiving, from the second STA, a frame comprising an indication of XACK capability of the second STA, for example, before step 1002.

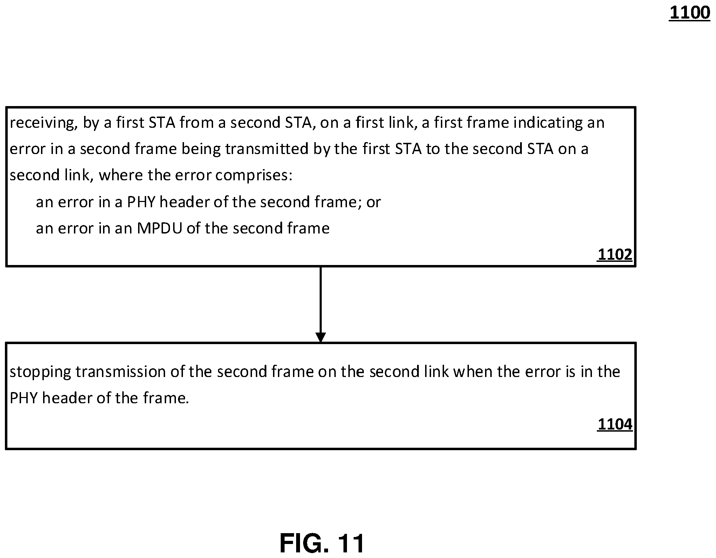

FIG. 11 shows an example method 1100. One or more steps of the example method 1100 may be performed by a first STA (e.g., non-AP STA or AP STA) configured to send (e.g., transmit) a second frame to a second STA (e.g., STA or AP). The first STA and the second STA may be communicatively coupled by a first link and a second link (e.g., 2.4 GHz, 5 GHz, 60 GHz, etc.).

As shown in FIG. 11, at step 1102, a first STA may receive, from a second STA and on a first link, a first frame indicating an error in a second frame being sent (e.g., transmitted) by the first STA to the second STA on a second link. The error may comprise at least one of: an error in a PHY header of the second frame; or an error in an MPDU of the second frame. For example, the error in the PHY header of the second frame may correspond to an error value or a validate value in a Universal Signal field (U-SIG), an Extremely High Throughout (EHT) Signal field (EHT-SIG), or an Ultra High Reliability (UHR) Signal field (U-SIG) of the PHY header of the second frame. For example, the error in the MPDU of the second frame may correspond to an error in a Frame Check Sequence (FCS) associated with the MPDU. For example, the second frame may comprise one or more MPDUs.

At step 1104, transmission of the second frame on the second link may be stopped, for example, if the error is in the PHY header of the second frame. For example, the method 1100 may further comprise recording the error and continuing transmission of the second frame, for example, if the error is in the MPDU of the second frame. For example, the method 1100 may further comprise monitoring the first link during transmission of the second frame. For example, the method 1100 may further comprise monitoring the first link for an acknowledgment frame, for example, after transmission of the second frame.

For example, the first frame may comprise an acknowledgment frame. The acknowledgment frame may comprise a XACK. For example, the first frame may comprise an indication of the second link. For example, the first frame may comprise an indication of the MPDU, for example, if the error is detected in the MPDU of the second frame. For example, if the error is detected in the MPDU of the second frame, the method 1100 may further comprise sending (e.g., transmitting) a subsequent MPDU of the second frame. For example, if the error is detected in the PHY header of the second frame, the method 1100 may further comprise stopping transmission of the second frame. For example, if the error is detected in the PHY header of the second frame, the first frame may comprise an indication of an error type of the detected error.

For example, the method 1100 may further comprise sending (e.g., transmitting) a frame comprising an indication of XACK capability of the first STA, for example, before step 1102. For example, the method 1100 may further comprise receiving, from the second STA, a frame comprising an indication of XACK capability of the second STA, for example, before step 1102.

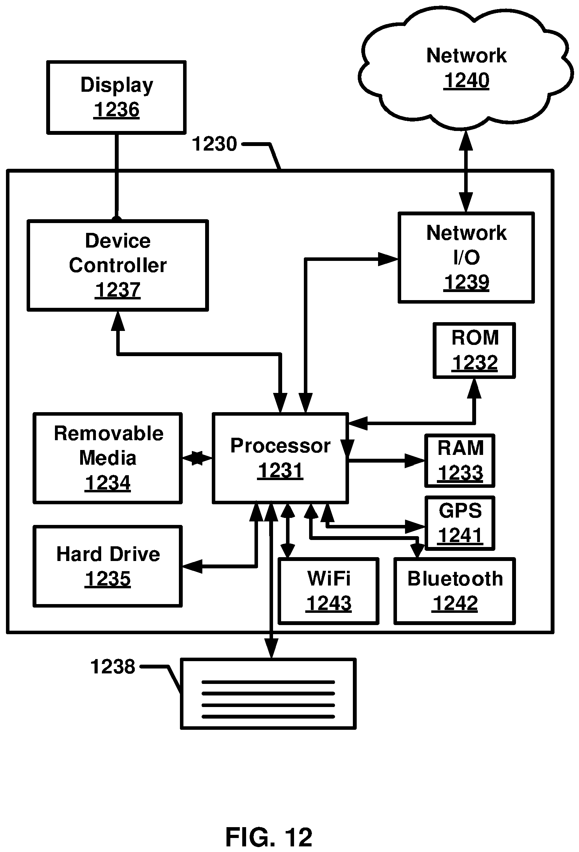

FIG. 12 shows example elements of a computing device that may be used to implement any of the various devices described herein, including, for example, a STA (e.g., 106-1, 106-2, 106-3, 106-4, 106-5, 106-6, 106-7, 106-8, 450-1 to 450-8, 502, 504, 802, 804, 902, 904), an AP (e.g., 104-1, 104-2), communication devices (e.g., 210, 260), and/or any computing and/or communication device described herein. The computing device 1230 may comprise one or more processors 1231, which may execute instructions stored in the random-access memory (RAM) 1233, the removable media 1234 (such as a Universal Serial Bus (USB) drive, compact disk (CD) or digital versatile disk (DVD), or floppy disk drive), or any other desired storage medium. Instructions may also be stored in an attached (or internal) hard drive 1235. The computing device 1230 may also comprise a security processor (not shown), which may execute instructions of one or more computer programs to monitor the processes executing on the processor 1231 and any process that requests access to any hardware and/or software components of the computing device 1230 (e.g., ROM 1232, RAM 1233, the removable media 1234, the hard drive 1235, the device controller 1237, a network interface 1239, a GPS 1241, a Bluetooth interface 1242, a WiFi interface 1243, etc.). The computing device 1230 may comprise one or more output devices, such as the display 1236 (e.g., a screen, a display device, a monitor, a television, etc.), and may comprise one or more output device controllers 1237, such as a video processor. There may also be one or more user input devices 1238, such as a remote control, keyboard, mouse, touch screen, microphone, etc. The computing device 1230 may also comprise one or more network interfaces, such as a network interface 1239, which may be a wired interface, a wireless interface, or a combination of the two. The network interface 1239 may provide an interface for the computing device 1230 to communicate with a network 1240 (e.g., a RAN, or any other network). The network interface 1239 may comprise a modem (e.g., a cable modem), and the external network 1240 may comprise communication links, an external network, an in-home network, a provider's wireless, coaxial, fiber, or hybrid fiber/coaxial distribution system (e.g., a DOCSIS network), or any other desired network. Additionally, the computing device 1230 may comprise a location-detecting device, such as a global positioning system (GPS) microprocessor 1241, which may be configured to receive and process global positioning signals and determine, with possible assistance from an external server and antenna, a geographic position of the computing device 1230.

The example in FIG. 12 may be a hardware configuration, although the components shown may be implemented as software as well. Modifications may be made to add, remove, combine, divide, etc. components of the computing device 1230 as desired. Additionally, the components may be implemented using basic computing devices and components, and the same components (e.g., processor 1231, ROM storage 1232, display 1236, etc.) may be used to implement any of the other computing devices and components described herein. For example, the various components described herein may be implemented using computing devices having components such as a processor executing computer-executable instructions stored on a computer-readable medium, as shown in FIG. 12. Some or all of the entities described herein may be software based, and may co-exist in a common physical platform (e.g., a requesting entity may be a separate software process and program from a dependent entity, both of which may be executed as software on a common computing device).

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising: detecting, by a first station (STA) and during transmission of a first frame from a second STA to the first STA via a first link, an error in the first frame; and based on detecting the error, and before an end of the transmission of the first frame, sending, to the second STA via a second link, a second frame indicating the error.

Clause 2. The method of clause 1, wherein the first frame comprises a physical layer protocol data unit (PPDU), and wherein the error comprises at least one of: an error in a physical layer (PHY) header of the PPDU; or an error in a medium access control (MAC) protocol data unit (MPDU) of the PPDU.

Clause 3. The method of any one of clauses 1 or 2, wherein the second frame comprises an acknowledgment frame.

Clause 4. The method of any one of clauses 1 to 3, wherein the second frame comprises an indication of a type of the error.

Clause 5. The method of any one of clauses 1 to 4, wherein sending the second frame comprises sending during one or more of the following time periods: at an interframe spacing after detection of the error; less than an interframe spacing after detection of the error; or without an interframe spacing after detection of the error.

Clause 6. The method of any one of clauses 1 to 5, wherein the error comprises an error in a physical layer (PHY) header of a physical layer protocol data unit (PPDU), and wherein sending the second frame comprises sending during one or more of the following time periods: before an end of reception of the PHY header; after an end of reception of the PHY header; at an interframe spacing after an end of reception of the PHY header; less than an interframe spacing after an end of reception of the PHY header; or without an interframe spacing after an end of reception of the PHY header.

Clause 7. The method of any one of clauses 1 to 6, wherein the error comprises an error in a medium access control (MAC) protocol data unit (MPDU) of a physical layer protocol data unit (PPDU), and wherein sending the second frame comprises sending before an end of reception of a subsequent MPDU of the first frame.

Clause 8. The method of any one of clauses 1 to 7, wherein the first link and the second link correspond to different frequency channels.

Clause 9. The method of any one of clauses 1 to 8, wherein the first frame comprises an indication of the second link.

Clause 10. The method of any one of clauses 1 to 9, further comprising: based on sending the second frame, stopping reception of the first frame.

Clause 11. The method of any one of clauses 1 to 10, further comprising: based on detecting the error, and before an end of reception of the first frame, sending, to the second STA via a second link, a second frame indicating the error.

Clause 12. The method of any one of clauses 1 to 11, wherein the second frame comprises an indication of cross-ACK (XACK).

Clause 13. A computing device comprising: one or more processors; and memory storing instructions that, when executed by the one or more processors, cause the computing device to perform: the method of any one of clauses 1 to 12.

Clause 14. A system comprising: a station configured to perform the method of any one of clauses 1 to 12.

Clause 15. A computer-readable medium storing instructions that, when executed, cause performance of: the method of any one of clauses 1 to 12.

Clause 16. A method comprising: transmitting, by a second station (STA) to a first STA via a first link, a first frame; and before an end of transmission of the first frame, receiving, from the first STA via a second link, a second frame indicating an error in the first frame.

Clause 17. The method of clause 16, wherein the first frame comprises a physical layer protocol data unit (PPDU), and wherein the error comprises at least one of: an error in a physical layer (PHY) header of the PPDU; or an error in a medium access control (MAC) protocol data unit (MPDU) of the PPDU.

Clause 18. The method of any one of clauses 16 or 17, wherein the first frame comprises a physical layer protocol data unit (PPDU) and the error comprises an error in a physical layer (PHY) header of the PPDU, and the method further comprises: based on receiving the second frame, stopping transmission of the first frame via the first link.

Clause 19. The method of any one of clauses 16 to 18, wherein the first frame comprises a physical layer protocol data unit (PPDU) and the error comprises an error in a medium access control (MAC) protocol data unit (MPDU) of the PPDU, and the method further comprises: based on receiving the second frame, recording the error and continuing transmission of the first frame via the first link.

Clause 20. The method of any one of clauses 16 to 19, further comprising: during transmission of the first frame, monitoring the second link for the second frame.

Clause 21. The method of any one of clauses 16 to 20, further comprising: after transmission of the first frame, monitoring the second link for the second frame.

Clause 22. The method of any one of clauses 16 to 21, wherein the second frame comprises an acknowledgment frame.

Clause 23. A computing device comprising: one or more processors; and memory storing instructions that, when executed by the one or more processors, cause the computing device to perform: the method of any one of clauses 16 to 22.

Clause 24. A system comprising: a station configured to perform the method of any one of clauses 16 to 22.

Clause 25. A computer-readable medium storing instructions that, when executed, cause performance of: the method of any one of clauses 16 to 22.

Clause 26. A method comprising: receiving, by a first computing device from a second computing device via a first link, a first portion of a first frame; detecting an error in the first portion of the first frame; and based on detecting the error, and before reception of a second portion of the first frame, sending, to the second computing device via a second link, a second frame indicating the error, wherein the second link is different from the first link.

Clause 27. The method of clause 26, wherein the first frame comprises a physical layer protocol data unit (PPDU), and wherein the error comprises at least one of: an error in a physical layer (PHY) header of the PPDU; or an error in a medium access control (MAC) protocol data unit (MPDU) of the PPDU.

Clause 28. The method of any one of clauses 26 or 27, wherein the second frame comprises an acknowledgment frame.

Clause 29. The method of any one of clauses 26 to 28, wherein the first frame comprises an indication of the second link.

Clause 30. The method of any one of clauses 26 to 29, further comprising: based on sending the second frame, stopping reception of the first frame.

Clause 31. The method of any one of clauses 26 to 30, wherein the second frame comprises an indication of cross-ACK (XACK).

Clause 32. The method of any one of clauses 26 to 31, wherein the second frame comprises an indication of a type of the error.

Clause 33. The method of any one of clauses 26 to 32, wherein sending the second frame comprises sending during one or more of the following time periods: at an interframe spacing after detection of the error; less than an interframe spacing after detection of the error; or without an interframe spacing after detection of the error.

Clause 34. The method of any one of clauses 26 to 33, wherein the error comprises an error in a physical layer (PHY) header of a physical layer protocol data unit (PPDU), and wherein sending the second frame comprises sending during one or more of the following time periods: before an end of reception of the PHY header; after an end of reception of the PHY header; at an interframe spacing after an end of reception of the PHY header; less than an interframe spacing after an end of reception of the PHY header; or without an interframe spacing after an end of reception of the PHY header.

Clause 35. The method of any one of clauses 26 to 34, wherein the error comprises an error in a medium access control (MAC) protocol data unit (MPDU) of a physical layer protocol data unit (PPDU), and wherein sending the second frame comprises sending before an end of reception of a subsequent MPDU of the first frame.

Clause 36. The method of any one of clauses 26 to 35, wherein the first link and the second link correspond to different frequency channels.

Clause 37. A computing device comprising: one or more processors; and memory storing instructions that, when executed by the one or more processors, cause the computing device to perform: the method of any one of clauses 26 to 36.

Clause 38. A system comprising: a station configured to perform the method of any one of clauses 26 to 36.

Clause 39. A computer-readable medium storing instructions that, when executed, cause performance of: the method of any one of clauses 26 to 36.

Clause 40. A method comprising: detecting, by a first station (STA), an error in a physical layer protocol data unit (PPDU) from a second STA on a first link, wherein the error comprises: an error in a physical layer (PHY) header of the PPDU; or an error in a medium access control (MAC) protocol data unit (MPDU) of the PPDU; and based on detecting the error, and before an end of reception of the PPDU, transmitting, on a second link, a frame indicating the error to the second STA.

Clause 41. A method comprising: detecting, by a first station (STA), while receiving a first frame from a second STA on a first link, an error in the first frame, wherein the error comprises: an error in a physical layer (PHY) header of the first frame; or an error in a medium access control (MAC) protocol data unit (MPDU) of the first frame; and without waiting for an end of reception of the first frame, transmitting, on a second link, a second frame indicating the error to the second STA.

Clause 42. The method of clauses 40 or 41, wherein transmitting the second frame is based on detecting the error.

Clause 43. The method of any one of clauses 40 to 42, wherein the second frame comprises an acknowledgment frame.

Clause 44. The method of any one of clauses 40 to 43, wherein the acknowledgement frame comprises a NACK.

Clause 45. The method of any one of clauses 40 to 44, wherein the first frame comprises one or more MPDUs.

Clause 46. The method of any one of clauses 40 to 45, wherein the error in the PHY header of the first frame corresponds to an error value or a validate value in a Universal Signal field (U-SIG), an Extremely High Throughout (EHT) Signal field (EHT-SIG), or an Ultra High Reliability (UHR) Signal field (UHR-SIG) of the PHY header of the first frame.

Clause 47. The method of any one of clauses 40 to 46, wherein the error in the MPDU of the first frame corresponds to an error in a Frame Check Sequence (FCS) associated with the MPDU.

Clause 48. The method of any one of clauses 40 to 47, wherein the error is detected in the PHY header of the first frame, and wherein transmitting the second frame comprises transmitting the second frame before an end of reception of the PHY header.

Clause 49. The method of any one of clauses 40 to 48, wherein transmitting the second frame comprises transmitting the second frame an interframe spacing after detection of the error.

Clause 50. The method of any one of clauses 40 to 49, wherein transmitting the second frame comprises transmitting the second frame less than an interframe spacing after detection of the error.

Clause 51. The method of any one of clauses 40 to 50, wherein transmitting the second frame comprises transmitting the second frame without an interframe spacing after detection of the error.

Clause 52. The method of any one of clauses 40 to 51, wherein the error is detected in the PHY header of the first frame, and wherein transmitting the second frame comprises transmitting the second frame after an end of reception of the PHY header.

Clause 53. The method of any one of clauses 40 to 52, wherein transmitting the second frame comprises transmitting the second frame an interframe spacing after the end of reception of the PHY header.

Clause 54. The method of any one of clauses 40 to 53, wherein transmitting the second frame comprises transmitting the second frame less than an interframe spacing after the end of reception of the PHY header.

Clause 55. The method of any one of clauses 40 to 54, wherein transmitting the second frame comprises transmitting the second frame without an interframe spacing after the end of reception of the PHY header.

Clause 56. The method of any one of clauses 40 to 55, wherein the error is detected in the MPDU of the first frame, and wherein transmitting the second frame comprises transmitting the second frame before an end of reception of a subsequent MPDU of the frame.

Clause 57. The method of any one of clauses 40 to 56, wherein transmitting the second frame comprises transmitting the second frame an interframe spacing after detection of the error.

Clause 58. The method of any one of clauses 40 to 57, wherein transmitting the second frame comprises transmitting the second frame less than an interframe spacing after detection of the error.

Clause 59. The method of any one of clauses 40 to 58, wherein transmitting the second frame comprises transmitting the second frame without an interframe spacing after detection of the error.

Clause 60. The method of any one of clauses 40 to 59, wherein the second frame comprises an indication of the first link.

Clause 61. The method of any one of clauses 40 to 60, wherein the error is detected in the MPDU of the first frame, and wherein the second frame comprises an indication of the MPDU.

Clause 62. The method of any one of clauses 40 to 61, wherein the error is detected in the MPDU of the first frame, the method further comprising decoding a subsequent MPDU of the first frame.

Clause 63. The method of any one of clauses 40 to 62, wherein the error is detected in the PHY header of the first frame, the method further comprising stopping reception of the first frame based on detecting the error.

Clause 64. The method of any one of clauses 40 to 63, wherein the error is detected in the PHY header of the first frame, and wherein the second frame comprises an indication of an error type of the detected error.

Clause 65. The method of any one of clauses 40 to 64, wherein the first STA comprises a non-AP STA or an AP STA.

Clause 66. The method of any one of clauses 40 to 65, wherein the second STA comprises a non-AP or an AP STA.

Clause 67. The method of any one of clauses 40 to 66, wherein the first link corresponds to a frequency channel over the 2.4, 5, 6, or 60 GHz band.

Clause 68. The method of any one of clauses 40 to 67, wherein the second link corresponds to a frequency channel over the 2.4, 5, 6, or 60 GHz band.

Clause 69. The method of any one of clauses 40 to 68, wherein the first link and the second link correspond to different frequency channels.

Clause 70. The method of any one of clauses 40 to 69, further comprising transmitting a frame comprising an indication of cross-ACK (XACK) capability of the first STA.

Clause 71. The method of any one of clauses 40 to 70, further comprising receiving, from the second STA, a frame comprising an indication of cross-ACK (XACK) capability of the second STA.

Clause 72. A method comprising: receiving, by a first station (STA) from a second STA, on a first link, an acknowledgment frame indicating an error in a physical layer protocol data unit (PPDU) being transmitted by the first STA to the second STA on a second link, wherein the error comprises: an error in a physical layer (PHY) header of the PPDU; or an error in a medium access control (MAC) protocol data unit (MPDU) of the PPDU; and stopping transmission of the PPDU on the second link when the error is in the PHY header of the frame; and recording the error and continuing transmission of the PPDU when the error is in the MPDU of the frame.

Clause 73. A method comprising: receiving, by a first station (STA) from a second STA, on a first link, a first frame indicating an error in a second frame being transmitted by the first STA to the second STA on a second link, wherein the error comprises: an error in a physical layer (PHY) header of the second frame; or an error in a medium access control (MAC) protocol data unit (MPDU) of the second frame; and stopping transmission of the second frame on the second link when the error is in the PHY header of the second frame.

Clause 74. The method of clauses 72 or 73, further comprising recording the error and continuing transmission of the second frame when the error is in the MPDU of the second frame.

Clause 75. The method of any one of clauses 72 to 74, further comprising monitoring the first link during transmission of the second frame.

Clause 76. The method of any one of clauses 72 to 75, further comprising monitoring the first link for an acknowledgment frame after transmission of the second frame.

Clause 77. The method of any one of clauses 72 to 76, wherein the second frame comprises one or more MPDUs.

Clause 78. The method of any one of clauses 72 to 77, wherein the error in the PHY header of the second frame corresponds to an error value or a validate value in a Universal Signal field (U-SIG), an Extremely High Throughout (EHT) Signal field (EHT-SIG), or an Ultra High Reliability (UHR) Signal field (U-SIG) of the PHY header of the second frame.

Clause 79. The method of any one of clauses 72 to 78, wherein the error in the MPDU of the second frame corresponds to an error in a Frame Check Sequence (FCS) associated with the MPDU.

Clause 80. The method of any one of clauses 72 to 79, wherein the first frame comprises an indication of the second link.

Clause 81. The method of any one of clauses 72 to 80, wherein the error is detected in the MPDU of the second frame, and wherein the first frame comprises an indication of the MPDU.

Clause 82. The method of any one of clauses 72 to 81, wherein the error is detected in the MPDU of the second frame, the method further comprising transmitting a subsequent MPDU(s) of the second frame.

Clause 83. The method of any one of clauses 72 to 82, wherein the first frame indicates the error is detected in the PHY header of the second frame, the method further comprising stopping transmission of the second frame.

Clause 84. The method of any one of clauses 72 to 83, wherein the first STA comprises a non-AP STA or an AP STA.

Clause 85. The method of any one of clauses 72 to 84, wherein the second STA comprises a non-AP or an AP STA.

Clause 86. The method of any one of clauses 72 to 85, wherein the first link corresponds to a frequency channel over the 2.4, 5, 6, or 60 GHz band.

Clause 87. The method of any one of clauses 72 to 86, wherein the second link corresponds to a frequency channel over the 2.4, 5, 6, or 60 GHz band.

Clause 88. The method of any one of clauses 72 to 87, wherein the first link and the second link correspond to different frequency channels.

Clause 89. The method of any one of clauses 72 to 88, wherein the first frame comprises a NACK.

Clause 90. The method of any one of clauses 72 to 89, further comprising transmitting a frame comprising an indication of cross-ACK (XACK) capability of the first STA.

Clause 91. The method of any one of clauses 72 to 90, further comprising receiving, from the second STA, a frame comprising an indication of cross-ACK (XACK) capability of the second STA.

A station may perform a method comprising multiple operations. The station may A first station (STA) may detect, during transmission of a first frame from a second STA to the first STA via a first link, an error in the first frame. The first STA may send a second frame indicating the error to the second STA via a second link, based on detecting the error and before an end of the transmission of the first frame. The first frame may comprise a physical layer protocol data unit (PPDU). The error may comprise at least one of: an error in a physical layer (PHY) header of the PPDU; or an error in a medium access control (MAC) protocol data unit (MPDU) of the PPDU. The second frame may comprise an acknowledgment frame. The second frame may comprise an indication of a type of the error. The first STA may send the second frame during one or more of the following time periods: at an interframe spacing after detection of the error; less than an interframe spacing after detection of the error; or without an interframe spacing after detection of the error. The error may comprise an error in a physical layer (PHY) header of a physical layer protocol data unit (PPDU). The first STA may send the second frame during one or more of the following time periods: before an end of reception of the PHY header; after an end of reception of the PHY header; at an interframe spacing after an end of reception of the PHY header; less than an interframe spacing after an end of reception of the PHY header; or without an interframe spacing after an end of reception of the PHY header. The error may comprise an error in a medium access control (MAC) protocol data unit (MPDU) of a physical layer protocol data unit (PPDU). The first STA may send the second frame before an end of reception of a subsequent MPDU of the first frame. The first link and the second link may correspond to different frequency channels. The first frame may comprise an indication of the second link. Based on sending the second frame, the first STA may stop reception of the first frame. Based on detecting the error, and before an end of reception of the first frame, the first STA may send, to the second STA via a second link, a second frame indicating the error. The second frame may comprise an indication of cross-ACK (XACK). The station may comprise one or more processors and memory, storing instructions, that when executed by the one or more processors perform the method described herein. A system may comprise the station configured to perform the described method, additional operations, and/or include the additional elements; and another station configured to send/receive one or more frames to/from the station. A computer-readable medium may store instructions that, when executed, cause performance of the described method, additional operations, and/or include additional elements.

A station may perform a method comprising multiple operations. The station may A second station (STA) may transmit, to a first STA via a first link, a first frame. The second STA may receive, before an end of transmission of the first frame, from the first STA via a second link, a second frame indicating an error in the first frame. The first frame may comprise a physical layer protocol data unit (PPDU). The error may comprise at least one of: an error in a physical layer (PHY) header of the PPDU; or an error in a medium access control (MAC) protocol data unit (MPDU) of the PPDU. The first frame may comprise a physical layer protocol data unit (PPDU). The error may comprise an error in a physical layer (PHY) header of the PPDU. Based on receiving the second frame, the second STA may stop transmission of the first frame via the first link. The first frame may comprise a physical layer protocol data unit (PPDU), and the error may comprise an error in a medium access control (MAC) protocol data unit (MPDU) of the PPDU. Based on receiving the second frame, the second STA may record the error and may continue transmission of the first frame via the first link. During transmission of the first frame, The second STA may monitor the second link for the second frame. After transmission of the first frame, The second STA may monitor the second link for the second frame. The second frame may comprise an acknowledgment frame. The station may comprise one or more processors and memory, storing instructions, that when executed by the one or more processors perform the method described herein. A system may comprise the station configured to perform the described method, additional operations, and/or include the additional elements; and another station configured to send/receive one or more frames to/from the station. A computer-readable medium may store instructions that, when executed, cause performance of the described method, additional operations, and/or include additional elements.

A station may perform a method comprising multiple operations. The station may A first computing device may receive, from a second computing device via a first link, a first portion of a first frame. The first computing device may detect an error in the first portion of the first frame. Based on detecting the error, and before reception of a second portion of the first frame, the first computing device may send, to the second computing device via a second link, a second frame indicating the error. The second link is different from the first link. The first frame may comprise a physical layer protocol data unit (PPDU). The error may comprise at least one of: an error in a physical layer (PHY) header of the PPDU; or an error in a medium access control (MAC) protocol data unit (MPDU) of the PPDU. The second frame may comprise an acknowledgment frame. The first frame may comprise an indication of the second link. Based on sending the second frame, the first computing device may stop reception of the first frame. The second frame may comprise an indication of cross-ACK (XACK). The second frame may comprise an indication of a type of the error. The first computing device may send the second frame during one or more of the following time periods: at an interframe spacing after detection of the error; less than an interframe spacing after detection of the error; or without an interframe spacing after detection of the error. The error may comprise an error in a physical layer (PHY) header of a physical layer protocol data unit (PPDU). The first computing device may send the second frame during one or more of the following time periods: before an end of reception of the PHY header; after an end of reception of the PHY header; at an interframe spacing after an end of reception of the PHY header; less than an interframe spacing after an end of reception of the PHY header; or without an interframe spacing after an end of reception of the PHY header. The error may comprise an error in a medium access control (MAC) protocol data unit (MPDU) of a physical layer protocol data unit (PPDU). The first computing device may send the second frame before an end of reception of a subsequent MPDU of the first frame. The first link and the second link may correspond to different frequency channels. The station may comprise one or more processors and memory, storing instructions, that when executed by the one or more processors perform the method described herein. A system may comprise the station configured to perform the described method, additional operations, and/or include the additional elements; and another station configured to send/receive one or more frames to/from the station. A computer-readable medium may store instructions that, when executed, cause performance of the described method, additional operations, and/or include additional elements.

A station may perform a method comprising multiple operations. The station may A first station (STA) may detect an error in a physical layer protocol data unit (PPDU) from a second STA on a first link. The error may comprise: an error in a physical layer (PHY) header of the PPDU; or an error in a medium access control (MAC) protocol data unit (MPDU) of the PPDU. Based on detecting the error, and before an end of reception of the PPDU, the first STA may transmit, on a second link, a frame indicating the error to the second STA. The first STA may transmit the second frame based on detecting the error. The second frame may comprise an acknowledgment frame. The acknowledgement frame may comprise a NACK. The first frame may comprise one or more MPDUs. The error in the PHY header of the first frame may correspond to an error value or a validate value in a Universal Signal field (U-SIG), an Extremely High Throughout (EHT) Signal field (EHT-SIG), or an Ultra High Reliability (UHR) Signal field (UHR-SIG) of the PHY header of the first frame. The error in the MPDU of the first frame may correspond to an error in a Frame Check Sequence (FCS) associated with the MPDU. The error may be detected in the PHY header of the first frame. The first STA may transmit the second frame before an end of reception of the PHY header. The first STA may transmit the second frame an interframe spacing after detection of the error. The first STA may transmit the second frame less than an interframe spacing after detection of the error. The first STA may transmit the second frame without an interframe spacing after detection of the error. The error may be detected in the PHY header of the first frame. The first STA may transmit the second frame after an end of reception of the PHY header. The first STA may transmit the second frame an interframe spacing after the end of reception of the PHY header. The first STA may transmit the second frame less than an interframe spacing after the end of reception of the PHY header. The first STA may transmit the second frame without an interframe spacing after the end of reception of the PHY header. The error may be detected in the MPDU of the first frame. The first STA may transmit the second frame before an end of reception of a subsequent MPDU of the frame. The first STA may transmit the second frame an interframe spacing after detection of the error. The first STA may transmit the second frame less than an interframe spacing after detection of the error. The first STA may transmit the second frame without an interframe spacing after detection of the error. The second frame may comprise an indication of the first link. The error may be detected in the MPDU of the first frame. The second frame may comprise an indication of the MPDU. The error may be detected in the MPDU of the first frame. The first STA may decode a subsequent MPDU of the first frame. The error may be detected in the PHY header of the first frame. The first STA may stop reception of the first frame based on detecting the error. The error may be detected in the PHY header of the first frame. The second frame may comprise an indication of an error type of the detected error. The first STA may comprise a non-AP STA or an AP STA. The second STA may comprise a non-AP or an AP STA. The first link may correspond to a frequency channel over the 2.4, 5, 6, or 60 GHz band. The second link may correspond to a frequency channel over the 2.4, 5, 6, or 60 GHz band. The first link and the second link may correspond to different frequency channels. The first STA may transmit a frame comprising an indication of cross-ACK (XACK) capability of the first STA. The first STA may receive, from the second STA, a frame comprising an indication of cross-ACK (XACK) capability of the second STA. The station may comprise one or more processors and memory, storing instructions, that when executed by the one or more processors perform the method described herein. A system may comprise the station configured to perform the described method, additional operations, and/or include the additional elements; and another station configured to send/receive one or more frames to/from the station. A computer-readable medium may store instructions that, when executed, cause performance of the described method, additional operations, and/or include additional elements.

A station may perform a method comprising multiple operations. The station may A first station (STA) may detect, while receiving a first frame from a second STA on a first link, an error in the first frame. The error may comprise: an error in a physical layer (PHY) header of the first frame; or an error in a medium access control (MAC) protocol data unit (MPDU) of the first frame. Without waiting for an end of reception of the first frame, the first STA may transmit, on a second link, a second frame indicating the error to the second STA. The first STA may transmit the second frame based on detecting the error. The second frame may comprise an acknowledgment frame. The acknowledgement frame may comprise a NACK. The first frame may comprise one or more MPDUs. The error in the PHY header of the first frame may correspond to an error value or a validate value in a Universal Signal field (U-SIG), an Extremely High Throughout (EHT) Signal field (EHT-SIG), or an Ultra High Reliability (UHR) Signal field (UHR-SIG) of the PHY header of the first frame. The error in the MPDU of the first frame may correspond to an error in a Frame Check Sequence (FCS) associated with the MPDU. The error may be detected in the PHY header of the first frame. The first STA may transmit the second frame before an end of reception of the PHY header. The first STA may transmit the second frame an interframe spacing after detection of the error. The first STA may transmit the second frame less than an interframe spacing after detection of the error. The first STA may transmit the second frame without an interframe spacing after detection of the error. The error may be detected in the PHY header of the first frame. The first STA may transmit the second frame after an end of reception of the PHY header. The first STA may transmit the second frame an interframe spacing after the end of reception of the PHY header. The first STA may transmit the second frame less than an interframe spacing after the end of reception of the PHY header. The first STA may transmit the second frame without an interframe spacing after the end of reception of the PHY header. The error may be detected in the MPDU of the first frame. The first STA may transmit the second frame before an end of reception of a subsequent MPDU of the frame. The first STA may transmit the second frame an interframe spacing after detection of the error. The first STA may transmit the second frame less than an interframe spacing after detection of the error. The first STA may transmit the second frame without an interframe spacing after detection of the error. The second frame may comprise an indication of the first link. The error may be detected in the MPDU of the first frame. The second frame may comprise an indication of the MPDU. The error may be detected in the MPDU of the first frame. The first STA may decode a subsequent MPDU of the first frame. The error may be detected in the PHY header of the first frame. The first STA may stop reception of the first frame based on detecting the error. The error may be detected in the PHY header of the first frame. The second frame may comprise an indication of an error type of the detected error. The first STA may comprise a non-AP STA or an AP STA. The second STA may comprise a non-AP or an AP STA. The first link may correspond to a frequency channel over the 2.4, 5, 6, or 60 GHz band. The second link may correspond to a frequency channel over the 2.4, 5, 6, or 60 GHz band. The first link and the second link may correspond to different frequency channels. The first STA may transmit a frame comprising an indication of cross-ACK (XACK) capability of the first STA. The first STA may receive, from the second STA, a frame comprising an indication of cross-ACK (XACK) capability of the second STA. The station may comprise one or more processors and memory, storing instructions, that when executed by the one or more processors perform the method described herein. A system may comprise the station configured to perform the described method, additional operations, and/or include the additional elements; and another station configured to send/receive one or more frames to/from the station. A computer-readable medium may store instructions that, when executed, cause performance of the described method, additional operations, and/or include additional elements.

A station may perform a method comprising multiple operations. The station may A first station (STA) may receive, from a second STA, on a first link, an acknowledgment frame indicating an error in a physical layer protocol data unit (PPDU) being transmitted by the first STA to the second STA on a second link. The error may comprise: an error in a physical layer (PHY) header of the PPDU; or an error in a medium access control (MAC) protocol data unit (MPDU) of the PPDU. The first STA may stop transmission of the PPDU on the second link when the error is in the PHY header of the frame. The first STA may record the error and continue transmission of the PPDU when the error is in the MPDU of the frame. The first STA may record the error and continue transmission of the second frame when the error is in the MPDU of the second frame. The first STA may monitor the first link during transmission of the second frame. The first STA may monitor the first link for an acknowledgment frame after transmission of the second frame. The second frame may comprise one or more MPDUs. The error in the PHY header of the second frame may correspond to an error value or a validate value in a Universal Signal field (U-SIG), an Extremely High Throughout (EHT) Signal field (EHT-SIG), or an Ultra High Reliability (UHR) Signal field (U-SIG) of the PHY header of the second frame. The error in the MPDU of the second frame may correspond to an error in a Frame Check Sequence (FCS) associated with the MPDU. The first frame may comprise an indication of the second link. The error may be detected in the MPDU of the second frame. The first frame may comprise an indication of the MPDU. The error may be detected in the MPDU of the second frame. The first STA may transmit a subsequent MPDU(s) of the second frame. The first frame may indicate the error detected in the PHY header of the second frame. The first STA may stop transmission of the second frame. The first STA may comprise a non-AP STA or an AP STA. The second STA may comprise a non-AP or an AP STA. The first link may correspond to a frequency channel over the 2.4, 5, 6, or 60 GHz band. The second link may correspond to a frequency channel over the 2.4, 5, 6, or 60 GHz band. The first link and the second link may correspond to different frequency channels. The first frame may comprise a NACK. The first STA may transmit a frame comprising an indication of cross-ACK (XACK) capability of the first STA. The first STA may receive, from the second STA, a frame comprising an indication of cross-ACK (XACK) capability of the second STA. The station may comprise one or more processors and memory, storing instructions, that when executed by the one or more processors perform the method described herein. A system may comprise the station configured to perform the described method, additional operations, and/or include the additional elements; and another station configured to send/receive one or more frames to/from the station. A computer-readable medium may store instructions that, when executed, cause performance of the described method, additional operations, and/or include additional elements.

A station may perform a method comprising multiple operations. The station may A first station (STA) may receive, from a second STA, on a first link, a first frame indicating an error in a second frame being transmitted by the first STA to the second STA on a second link. The error may comprise: an error in a physical layer (PHY) header of the second frame; or an error in a medium access control (MAC) protocol data unit (MPDU) of the second frame. The first STA may stop transmission of the second frame on the second link when the error is in the PHY header of the second frame. The first STA may record the error and continue transmission of the second frame when the error is in the MPDU of the second frame. The first STA may monitor the first link during transmission of the second frame. The first STA may monitor the first link for an acknowledgment frame after transmission of the second frame. The second frame may comprise one or more MPDUs. The error in the PHY header of the second frame may correspond to an error value or a validate value in a Universal Signal field (U-SIG), an Extremely High Throughout (EHT) Signal field (EHT-SIG), or an Ultra High Reliability (UHR) Signal field (U-SIG) of the PHY header of the second frame. The error in the MPDU of the second frame may correspond to an error in a Frame Check Sequence (FCS) associated with the MPDU. The first frame may comprise an indication of the second link. The error may be detected in the MPDU of the second frame. The first frame may comprise an indication of the MPDU. The error may be detected in the MPDU of the second frame. The first STA may transmit a subsequent MPDU(s) of the second frame. The first frame may indicate the error detected in the PHY header of the second frame. The first STA may stop transmission of the second frame. The first STA may comprise a non-AP STA or an AP STA. The second STA may comprise a non-AP or an AP STA. The first link may correspond to a frequency channel over the 2.4, 5, 6, or 60 GHz band. The second link may correspond to a frequency channel over the 2.4, 5, 6, or 60 GHz band. The first link and the second link may correspond to different frequency channels. The first frame may comprise a NACK. The first STA may transmit a frame comprising an indication of cross-ACK (XACK) capability of the first STA. The first STA may receive, from the second STA, a frame comprising an indication of cross-ACK (XACK) capability of the second STA. The station may comprise one or more processors and memory, storing instructions, that when executed by the one or more processors perform the method described herein. A system may comprise the station configured to perform the described method, additional operations, and/or include the additional elements; and another station configured to send/receive one or more frames to/from the station. A computer-readable medium may store instructions that, when executed, cause performance of the described method, additional operations, and/or include additional elements.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

An access point (and an AP MLD) may communicate with one or more wireless devices (e.g., computing device(s), non-AP MLD(s), station(s), etc.). Computing devices described herein may support multiple technologies, and/or multiple releases of the same technology. Computing devices may have some specific capability(ies) depending on wireless device category and/or capability(ies). Computing devices referred to herein may correspond to a plurality of computing devices compatible with a given LTE, 5G, 6G, 3GPP or non-3GPP release, IEEE 802.11 Standard(s) (e.g., IEEE 802.11be, beyond IEEE 802.11be), or Wi-Fi Alliance (WFA) Standard(s) (e.g., Wi-Fi 7, Wi-Fi 8) technology. A plurality of computing devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of access points and/or a plurality of wireless devices in a coverage area that may not comply with the disclosed methods, for example, because those wireless devices and/or access points may perform based on other (e.g., older or newer) releases of LTE, 5G, 6G, 3GPP or non-3GPP, IEEE 802.11 Standards (e.g., IEEE 802.1 1be, beyond IEEE 802.11be), or Wi-Fi Alliance (WFA) Standards (e.g., Wi-Fi 7, Wi-Fi 8) technology.

Communications described herein may be determined, generated, sent, and/or received using any quantity of messages, information elements, fields, parameters, values, indications, information, bits, and/or the like. While one or more examples may be described herein using any of the terms/phrases message, information element, field, parameter, value, indication, information, bit(s), and/or the like, one skilled in the art understands that such communications may be performed using any one or more of these terms, including other such terms. For example, one or more parameters, fields, and/or information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as access points (APs), AP multi-link devices(MLDs), stations (STAs), non-AP STAs, non-AP MLDs, base stations, wireless devices or user equipment (wireless device), servers, switches, antennas, and/or the like. A network may comprise any wireless technology, including but not limited to, cellular, wireless, Wi-Fi, 4G, 5G, 6G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

## Claims

1. A method comprising:
detecting, by a first station (STA), an error in a first frame during transmission of the first frame from a second STA to the first STA via a first link; and
based on detecting the error, and before an end of the transmission of the first frame, sending, to the second STA via a second link, a second frame indicating the error.

2. The method of claim 1, wherein the first frame comprises a physical layer protocol data unit (PPDU), and wherein the error comprises at least one of:
an error in a physical layer (PHY) header of the PPDU; or
an error in a medium access control (MAC) protocol data unit (MPDU) of the PPDU.

3. The method of any one of claims 1 or 2, wherein the second frame comprises an acknowledgment frame.

4. The method of any one of claims 1 to 3, wherein the second frame comprises an indication of a type of the error.

5. The method of any one of claims 1 to 4, wherein sending the second frame comprises sending during one or more of the following time periods:
at an interframe spacing after detection of the error;
less than an interframe spacing after detection of the error; or
without an interframe spacing after detection of the error.

6. The method of any one of claims 1 to 5, wherein the error comprises an error in a physical layer (PHY) header of a physical layer protocol data unit (PPDU), and wherein sending the second frame comprises sending during one or more of the following time periods:
before an end of reception of the PHY header;
after an end of reception of the PHY header;
at an interframe spacing after an end of reception of the PHY header;
less than an interframe spacing after an end of reception of the PHY header; or
without an interframe spacing after an end of reception of the PHY header.

7. The method of any one of claims 1 to 6, wherein the error comprises an error in a medium access control (MAC) protocol data unit (MPDU) of a physical layer protocol data unit (PPDU), and wherein sending the second frame comprises sending before an end of reception of a subsequent MPDU of the first frame.

8. The method of any one of claims 1 to 7, wherein the first link and the second link correspond to different frequency channels.

9. The method of any one of claims 1 to 8, wherein the first frame comprises an indication of the second link.

10. The method of any one of claims 1 to 9, further comprising:
based on sending the second frame, stopping reception of the first frame.

11. The method of any one of claims 1 to 10, further comprising:
based on detecting the error, and before an end of reception of the first frame, sending, to the second STA via a second link, a second frame indicating the error.

12. The method of any one of claims 1 to 11, wherein the second frame comprises an indication of cross-ACK (XACK).

13. A computing device comprising: one or more processors; and memory storing instructions that, when executed by the one or more processors, cause the computing device to perform:
the method of any one of claims 1 to 12.

14. A system comprising:
a station configured to perform the method of any one of claims 1 to 12.

15. A computer-readable medium storing instructions that, when executed, cause performance of:
the method of any one of claims 1 to 12.
